# EUROPÄISCHE PATENTANMELDUNG

(11) **EP 2 182 011 A1**
(43) Veröffentlichungstag der Anmeldung: **05.05.2010**
(21) Anmeldenummer: 08167837.7
(22) Anmeldetag: 29.10.2008
(51) Int. Cl.: C08F 2/38, C08L 33/02, C08F 20/06

(54) **Verfahren zur Herstellung von wässrigen Polyacrylsäurelösungen mittels kontrollierter radikalischer Polymerisation**

(71) Anmelder: BASF SE, 67056 Ludwigshafen (DE)
(72) Erfinder: Csihony, Szilard, 69469, Weinheim (DE); Stäb, Tobias, 67227, Frankenthal (DE); Weidl, Christian Hubert, 67346, Speyer (DE)

(57) **Zusammenfassung**

Verfahren zur Herstellung von wässrigen Lösungen von Homo- oder Copolymeren der Acrylsäure mit einer mittleren molaren Masse Mₙ von 500 g/mol bis 10000 g/mol mittels kontrollierter radikalischer Polymerisation in wässrigem Medium.

## Beschreibung

Die vorliegende Erfindung betrifft ein Verfahren zur Herstellung von wässrigen Lösungen von Homo- oder Copolymeren der Acrylsäure mit einer mittleren molaren Masse Mₙ von 500 g/mol bis 10000 g/mol mittels kontrollierter radikalischer Polymerisation in wässrigem Medium.

Die Herstellung von Polyacrylsäure mittels kontrollierter radikalischer Polymerisation ist prinzipiell bekannt. Eine bekannte Technik zur kontrollierten radikalischen Polymerisation ist die RAFT (Reversible Addition Fragmentation Transfer) - Technik.

Bei der RAFT-Polymerisation werden schwefelhaltige Verbindungen zur Kontrolle der Reaktion eingesetzt, insbesondere Verbindungen der der allgemeinen Formel Z-C(S)-SR, wobei Z beispielsweise für eine Kohlenwasserstoffgruppe, eine alkoholische Gruppe R-O-oder eine Thiolgruppe R-S- stehen kann. Die wesentlichen Reaktionsschritte einer RAFT-Polymerisation sind nachfolgend dargestellt. Hinsichtlich von Einzelheiten sei auf die einschlägige Literatur, wie beispielsweise auf "Handbook of RAFT-Polymerization", Hrsg. Barner-Kowollik, Christopher, Wiley-VCH, Weinheim 2008 verwiesen.

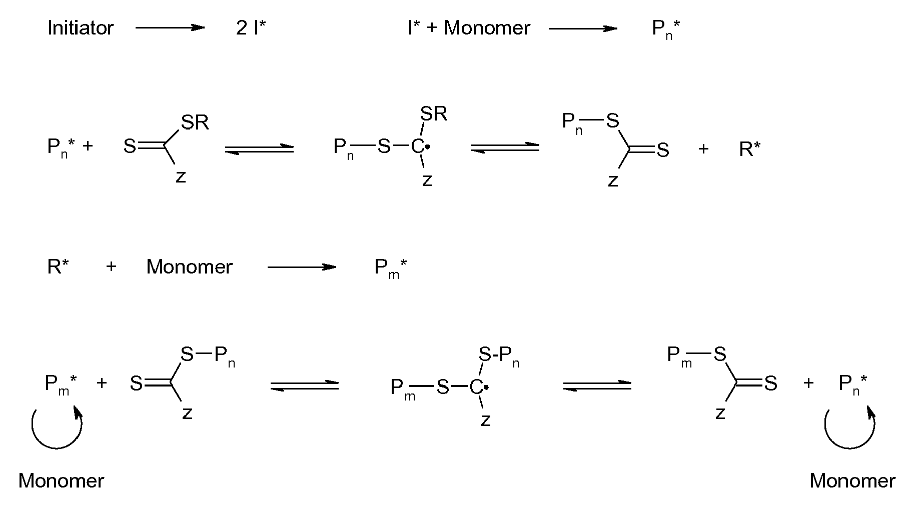

Im ersten Schritt werden Startradikale durch den Zerfall eines üblichen Initiators für die radikalische Polymerisation gebildet. Im zweiten Schritt reagieren diese Startradikale I* mit einem Monomer zu einem Pₙ*-Radikal. Das Pₙ*-Radikal reagiert im dritten Schritt mit dem RAFT-Reagens unter Ausbildung eines mehr oder weniger stabilen Zwischenradikals. Dieses hat zwei Möglichkeiten weiterzureagieren: Einerseits kann es zurückreagieren und das Pₙ*-Radikal wieder freisetzen. Zum anderen kann es auch den Rest R als ein R*-Radikal freisetzen. Das freigesetzte Radikal R* ist seinerseits in der Lage, eine neue Polymerkette zu starten, indem es mit dem Monomer zu der Spezies Pₘ* reagiert. Die Spezies Pₘ* und Pₙ* weisen die gleiche Reaktivität im Hinblick auf die Umsetzung mit weiteren Monomeren, aber auch mit dem RAFT-Reagens auf. Dadurch entsteht ein Gleichgewicht zwischen der Übergangsradikalspezies und den beiden Radikalen Pₙ* und Pₘ*. Die Einstellung dieses Gleichgewichts ist für die Kontrolle der Polymerisation verantwortlich. Jeweils freigesetzte Radikale Pₙ* und Pₘ* können mit weiteren Monomeren unter Kettenverlängerung reagieren, reagieren aber auch sehr schnell wieder mit dem RAFT-Reagens.

Die Anwendung der RAFT-Technologie zur Polymerisation von Acrylsäure ist prinzipiell bekannt.

EP 910 587 B1 offenbart die Polymerisation einer Vielzahl verschiedener ethylenisch ungesättigter Monomere unter Verwendung bestimmter Schwefelverbindungen, wie beispielsweise Dithiocarbonsäurederivaten oder Trithiokohlensäurederivaten. In einem Beispiel wird Polymerisation von Acrylsäure unter Verwendung von 1-Phenylethyldithiobenzoat in Dimethylformamid als Lösungsmittel beschrieben. Es entsteht Polyacrylsäure mit einer mittleren molaren Masse Mₙ von 13792 g/mol und einer Uneinheitlichkeit M_{w}/Mₙ von 1,23.

EP 1 255 731 B1 offenbart symmetrische, mit Carboxylgruppen substituierte Trithiokohlensäurederivate und deren Verwendung zur kontrollierten radikalischen Polymerisation. Die Schrift erwähnt die Möglichkeit der Polymerisation von Acrylsäure, aber nicht die Polymerisation in Wasser.

US 2007/0179262 offenbart ein Verfahren zur Herstellung von Polyacrylsäure oder Copolymeren von Acrylsäure mit anderen wasserlöslichen Comonomeren unter Verwendung von symmetrischen, mit Carboxygruppen substituierten Trithiokohlensäurederivaten.

US 6,153,705 offenbart in Beispiel 2.25die Herstellung von Polyacrylsäure mittels kontrollierter radikalischer Polymerisation von Acrylsäure in wässrigem Medium unter Verwendung von (I-Isopropylxanthyl)valeronitril. Die Reaktion wird durchgeführt, indem man alle Komponenten miteinander mischt und auf 70°C erhitzt. Die Acrylsäure wird vor der Reaktion auf einen pH-Wert von 6 bis 7 neutralisiert. Je nach Bedingungen entsteht Polyacrylsäure mit einer mittleren molaren Masse Mₙ von 8900 g/mol bis 14800 g/mol und einer Uneinheitlichkeit M_{w}/Mₙ von 1,4 bis 1,7.

US 2004/0097674 offenbart ein Verfahren zur Herstellung von Polyacrylsäure oder Copolymeren von Acrylsäure mit anderen wasserlöslichen Comonomeren unter Verwendung eines Transfer-Agens' der allgemeinen Formel R-X-C(S)-S-R', wobei X für S oder O und R und R' für eine große Anzahl verschiedener Reste, insbesondere für aromatische Reste stehen kann. Die Reaktion wird so durchgeführt, dass man gleichzeitig einen "wahren" Polymolekularitätsindex IPᵥ von weniger als 2 bei einer mittleren molaren Masse Mₙ von mehr als 1000 g/mol erhält und außerdem im Zuge der Polymerisation kein Gel auftritt. In den Beispielen werden überwiegend Alkohole als Lösemittel verwendet, bei zwei Beispielen wird auch in wässriger Lösung unter Verwendung von Xanthogenaten polymerisiert, welche mit zwei Carbonsäureethylestergruppen substituiert sind.

Bei den genannten Verfahren fungieren die schwefelhaltigen Transfer-Agentien nicht als Katalysator, sondern werden in das Polymer eingebaut. Dies kann je nach Anwendung des Polymers unerwünscht sein. Es sind daher auch Techniken vorgeschlagen worden, die schwefelhaltigen Gruppen von den Polymeren abzuspalten.

US 2003/0166790 offenbart ein Verfahren zum Abspalten von Dithiogruppen durch Umsetzen mit Aminen, US 2004/0122193 offenbart ein Verfahren, bei dem man das Polymer mit einer Quelle für freie Radikale sowie mindestens einer organischen Verbindung mit einem labilen Wasserstoffatom umsetzt, und US 2007/0027266 offenbart ein Verfahren zum oxidativen Abspalten der Gruppen mittels Ozon.

Polyacrylsäure oder Polyacrylsäurecopolymere mit einer relativ niedrigen molaren Masse Mₙ können als Dispergierhilfsmittel, beispielsweise für Calciumcarbonatpartikel eingesetzt werden. Derartige Anwendungen sind beispielsweise in US 4,509,987, US 5,317,053, US 7,033,428. Es ist auch bekannt, mittels RAFT-Polymerisation erhaltene Polyacrylsäure als Dispergierhilfsmittel einzusetzen, wie beispielsweise von J. Loiseau et al., Macromolecules 2003, 36, 3066 - 3077 oder der bereits zitierten Schrift US 2004/0097674 offenbart. Derartige Polyacrylsäuren weisen ein besseres Dispergierverhalten auf als nach konventionellen Methoden hergestellte Polyacrylsäure.

Die Polyacrylsäuren werden als Dispergierhilfsmittel bevorzugt in wässriger Formulierung in einer Konzentration von ca. 40 bis 50 Gew. % eingesetzt. Aus wirtschaftlichen Gründen ist die Isolierung von Polyacrylsäure gefolgt von der Herstellung einer passenden Formulierung unwirtschaftlich, sondern ein wirtschaftlicher Herstellprozess sollte eine wässrige Formulierung liefern, die ohne weitere Reinigung oder Aufarbeitung für den Dispergierprozess eingesetzt werden kann.

Die RAFT-Polymerisation von Acrylsäure in wässriger Lösung sowie die längere Lagerung der erhaltenen Polymerlösungen bereitet jedoch in der Praxis Probleme. Zum einen sind viele der vorgeschlagenen RAFT-Reagenzien nicht zum Arbeiten in wässriger Lösung geeignet. Weiterhin bereitet bei den beschriebenen Batch-Synthesen beim Arbeiten im technischen Maßstab die Abfuhr der Reaktionswärme Probleme, so dass die Reaktion nur schwer zu beherrschen ist. Schließlich können die während der RAFT-Polymerisation in die Polyacrylsäure eingebauten schwefelhaltigen Transfer-Agentien im Zuge der Lagerung hydrolysieren und dabei Schwefelwasserstoff oder andere leicht flüchtige Schwefelverbindungen freisetzen. Hierdurch bekommen die Polyacrylsäurelösungen einen unangenehmen, höchst unerwünschten Geruch.

Wie oben dargestellt, sind Methoden vorgeschlagen worden, RAFT-Reagenzien nach der Polymerisation wieder abzuspalten. Es wurde gefunden, dass das Abspalten schwefelhaltiger Gruppen nach der RAFT-Polymerisation von Acrylsäure zur Folge haben kann, dass sich die molare Masse der erhaltenen Polyacrylsäure um 30 bis 40 % verringert und die Uneinheitlichkeit Mₙ/ M_{w} des Polymers zunimmt. Während schon alleine die Verbreiterung der Verteilung die Vorteile der RAFT-Polymerisation zunichte machen kann, macht die Abnahme der molaren Masse im Zuge der Desaktivierung den Prozess nur schwer steuerbar.

Aufgabe der Erfindung war es, ein wirtschaftliches Verfahren zum Herstellen von wässrigen Polyacrylsäurelösungen in technischem Maßstabe bereitzustellen, bei dem im Zuge der Abspaltung der RAFT-Reagienzien nach der Polymerisation kein Abbau des Polymers erfolgt.

Dem entsprechend wurde ein Verfahren zur Herstellung von wässrigen Lösungen von Homo- oder Copolymeren der Acrylsäure sowie optional wasserlöslichen, monoethylenisch ethylenisch ungesättigten Comonomeren (C) in wässrigem Medium gefunden, wobei man die Herstellung in Gegenwart eines schwefelhaltigen Hilfsmittels (H) zur Kontrolle der Reaktion vornimmt, und wobei
- die Menge Acrylsäure mindestens 80 Gew. % bzgl. der Summe aller Monomere zusammen beträgt,
- die zahlenmittlere molare Masse Mₙ des Homo- oder Copolymers 500 g/mol bis 10000 g/mol beträgt,
- die Uneinheitlichkeit des Homo- oder Copolymers M_{w} / Mₙ < 2 ist,
- die Konzentration des Homo- oder Copolymers 20 bis 60 Gew. % bzgl. aller Bestandteile der wässrigen Lösung beträgt, und
- die Polymerisationstemperatur 20 bis 100°C beträgt,
und wobei es sich bei dem Hilfsmittel H um ein unsymmetrisches Molekül der allgemeinen Formel (I) R¹-X-C(S)-S-CR²ₙ(COOR³)ₘ (I) handelt, die Reste und die Indices die folgende Bedeutung haben
- n, m :: unabhängig voneinander 1 oder 2, wobei n + m = 3,
- X :: O oder S,
- R¹:: ein Rest ausgewählt aus der Gruppe von
R^{1a} Alkylresten ausgewählt aus der Gruppe von Methyl-, Ethyl-, 1-Propyl-, 1-Butyl und 2-Methyl-1-propyl,
R^{1b} Resten der allgemeinen Formel R³OOC-(CH₂)ₒ-, wobei O für eine natürliche Zahl von 1 bis 4 steht, oder
R^{1c} Alkoxyresten der allgemeinen Formel R⁴-[-O-CH₂-CH₂]ₖ-, wobei R⁴ für H oder einen geradkettigen oder verzweigten Alkylrest mit 1 bis 4 C-Atomen und k für eine Zahl von 1 bis 10 steht,
- R²:: unabhängig voneinander H oder ein Alkylrest mit 1 bis 4 C-Atomen, mit der Maßgabe, dass nicht mehr als ein Rest R² für H steht,
- R³:: unabhängig voneinander H, ein Kation, Methyl oder Ethyl,
und das Verfahren die folgenden Schritte umfasst:
- Vorlegen einer wässrigen Lösung oder Dispersion des schwefelhaltigen Hilfsmittels (H) in einem temperierbaren Reaktionsbehälter,
- Erwärmen auf die gewünschte Reaktionstemperatur,
- Kontinuierliches Zugeben eines Azogruppen aufweisenden, wasserlöslichen Initiators für die thermische Polymerisation (In), wobei das Molverhältnis der Gesamtmenge des Initiators (In) zum Hilfsmittels [In] / [H] 1:1 bis 1 : 100 beträgt,
- Kontinuierliches Zugeben von Acrylsäure oder Salzen davon sowie optional weiterer Comonomere oder einer wässrigen Lösung der genannten Monomere, wobei das Molverhältnis der Monomere zum Hilfsmittel [Monomere] / [H] 5 : 1 bis 150 : 1 beträgt, sowie
- Desaktivieren des an das gebildete Acrylsäure-Homo- oder Copolymer gebundenen Hilfsmittels (H),
mit der Maßgabe, dass man die Polymerisation bis zu einem Umsatz von mindestens 99 % führt, und dass man die Gesamtmenge des eingesetzten wässrigen Mediums so bemisst, dass nach Durchführung des Verfahrens die Konzentration des Homo- oder Copolymers 20 bis 60 Gew. % bzgl. aller Bestandteile der wässrigen Lösung beträgt.

Zu der Erfindung ist im Einzelnen das Folgende auszuführen:

Mittels des erfindungsgemäßen Verfahrens wird eine wässrige Lösung von Homo- oder Copolymeren der Acrylsäure durch Polymerisation in wässrigem Medium hergestellt.

Der Begriff "wässrige Lösung" bzw. "wässriges Medium" im Sinne dieser Erfindung soll bedeuten, dass es sich bei den eingesetzten Lösemitteln im Wesentlichen um Wasser handelt. Dies schließt die Anwesenheit von geringen Mengen anderer, mit Wasser mischbarer Lösemittel nicht aus. Bei weiteren Lösemitteln kann es sich beispielsweise um Alkohole wie Methanol, Ethanol oder Propanol handeln. Die Menge von Wasser sollte aber im Regelfalle mindestens 80 Gew. %, bevorzugt mindestens 90 Gew. % und besonders bevorzugt mindestens 95 Gew. % bezüglich der Summe aller Lösemittel zusammen betragen. Besonders bevorzugt wird als Lösemittel ausschließlich Wasser eingesetzt. Diese Vorgehensweise schließt aber nicht aus, dass dennoch nach der Polymerisation geringe Menge von Alkoholen aufgrund von Nebenreaktionen im wässrigen Medium vorhanden sein können.

Die Konzentration des Homo- oder Copolymers in der wässrigen Lösung beträgt üblicherweise 20 bis 60 Gew. % bzgl. aller Bestandteile der wässrigen Lösung, bevorzugt 30 bis 55 Gew. % und besonders bevorzugt 35 bis 52 Gew. %.

Erfindungsgemäß können neben Acrylsäure optional weitere wasserlösliche, monoethylenisch ungesättigte Comonomere (C) zur Synthese der Polymere eingesetzt werden, wobei die Menge an Acrylsäure mindestens 80 Gew. % bzgl. der Summe aller Monomere zusammen beträgt, bevorzugt mindestens 90 Gew. %, besonders bevorzugt 95 Gew. % und ganz besonders bevorzugt wird ausschließlich Acrylsäure als Monomer eingesetzt.

Durch die Verwendung von Comonomeren lassen sich die Eigenschaften der Acrylsäurepolymere verändern. Beispiele geeigneter monoethylenisch ungesättigte Comonomere (C) umfassen andere Monomere mit sauren Gruppen, wie beispielsweise Methacrylsäure, Crotonsäure, Maleinsäure, Itaconsäure, Vinylphosphonsäure, Vinylsulfonsäure, 2-Acrylamido-2-methyl-propansulfonsäure, wasserlösliche (Meth)acrylsäurederivate wie beispielsweise Hydroxyethylacrylat, Hydroxypropylacylat, Hydroxybutylacrylat, (Meth)acrylamid, Vinylformamid, Alkali (3- methacryloyloxy)-propansulfonat, Dimethylamino-ethylacrylat, 2-Acryloyloxyethyl-trimethylammoniumchlorid, Dimethylaminomethacrylat oder Polyethylenglykolmethylether(meth)acrylat.

Bevorzugte Comomonere (C) sind -sofern überhaupt vorhanden- Maleinsäure und Methacrylsäure.

Die Acrylsäurehomo- oder copolymere werden mittels kontrollierter radikalischer Polymerisation in Gegenwart eines schwefelhaltigen Hilfsmittels (H) zur Kontrolle der Reaktion hergestellt. Derartige Hilfsmittel werden häufig auch als RAFT-Reagenz bezeichnet.

Erfindungsgemäß handelt es sich bei dem Hilfsmittel (H) um ein unsymmetrisches Molekül der allgemeinen Formel R¹-X-C(S)-S-CR²ₙ(COOR³)ₘ (I).

In Formel (I) steht X hierbei für O oder für S, es handelt sich also entweder um Derivate der Trithiokohlensäure oder der Dithiokohlensäure. Letztere werden auch Xanthogenate genannt. Bevorzugt steht X für O, es handelt sich bevorzugt also um Xanthogenate.

Bei dem Rest R¹ handelt es sich um einen Rest ausgewählt aus der Gruppe von Resten R^{1a}, R^{1b} oder R^{1c}.

Bei den Resten R^{1a} handelt es sich um Alkylreste ausgewählt aus der Gruppe von Methyl-, Ethyl-, 1-Propyl-, 1-Butyl und 2-Methyl-1-propylresten. Das an X direkt gebundene Kohlenstoffatom ist also mit maximal einem weiteren C-Atom verbunden. Bevorzugt handelt es sich bei R^{1a} um lineare Alkylreste ausgewählt aus der Gruppe von Methyl-, Ethyl-, 1-Propyl-, 1-Butylresten und besonders bevorzugt handelt es sich bei R^{1a} um Methyl- oder Ethylreste.
Bei den Resten R^{1b} handelt es sich um Carboxylgruppen bzw. Carboxylatgruppen aufweisende Reste der allgemeinen Formel R³OOC-(CH₂)ₒ-, wobei O für eine natürliche Zahl von 1 bis 4, bevorzugt 1 bis 3 steht. Bei R³ handelt es sich unabhängig voneinander um H, ein Kation, Methyl oder Ethyl. Kationen weisen die allgemeine Formel ¹/ₘ M^{m+} auf, wobei m für 1, 2 oder 3, bevorzugt 1 oder 2 und besonders bevorzugt für 1 steht. Als Kationen kommen insbesondere Alkalimetallionen, Ammoniumionen und Erdalkalimetallionen in Frage. Bevorzugt sind Alkalimetallionen, insbesonderes Na⁺ sowie Ammoniumionen, wie beispielsweise NH₄⁺ oder Alkylammonium oder Hydroxyalkylammoniumionen. Bevorzugt handelt es sich bei R³ um H oder eine Methylgruppe.

Bei den Resten R^{1c} handelt es sich um Alkoxyreste der allgemeinen Formel R⁴-[-O-CH₂-CH₂]ₖ-, wobei R⁴ für H oder einen geradkettigen oder verzweigten Alkylrest mit 1 bis 4 C-Atomen und k für eine Zahl von 1 bis 10 steht. Bevorzugt steht R⁴ für H oder Methyl, und k steht bevorzugt für eine Zahl von 1 bis 5, besonders bevorzugt 1 bis 3. Dem Fachmann ist bekannt, dass sich derartige Reste durch Alkoxylierung herstellen lassen, welche zu einer statistischen Verteilung der Kettenlängen führt, und dass die angegebenen Kettenlängen daher als Mittelwerte zu betrachteten sind.

Das mit einem Schwefelatom verbundene C-Atom weist n Substituenten R² sowie m Substituenten -COOR³ auf, wobei n und m jeweils unabhängig voneinander für 1 oder 2, stehen und die Summe n + m = 3 ist. Das Hilfsmittel (H) weist also entweder das Strukturfragment -C(S)-CR²(COOR³)₂ oder das Strukturfragment -C(S)-CR²₂(COOR³) auf.

Bei den n Resten R² handelt es sich unabhängig voneinander um H oder einen geradkettigen oder verzweigten Alkylrest mit 1 bis 4 Kohlenstoffatomen, beispielsweise um Methyl-, Ethyl-, 1-Propyl-, 2-Propyl, 1-Butyl-oder 2-Butylreste, mit der Maßgabe, dass nicht mehr als ein Rest R² für H steht. Bevorzugt handelt es sich bei R² um H, Methyl oder Ethyl und besonders bevorzugt um H oder Methyl. Die Reste R³ haben die Bedeutung wie oben definiert.

In einer bevorzugten Ausführungsform des erfindungsgemäßen Verfahrens weist das Hilfsmittel (H) die allgemeine Formel R¹-O-C(S)-S-CR²ₙ(COOR³)ₘ (II) auf, d.h. es handelt sich bei dem Hilfsmittel um ein Xanthogenat.

In einer besonders bevorzugten Ausführungsform handelt es sich bei dem Hilfsmittel (H) um ein Xanthogenat, welches die allgemeine Formel R¹-O-C(S)-S-CH(CH₃)(COOR³) (III) aufweist, wobei es sich bei R¹ in Formel (III) bevorzugt um einen Rest R^{1a} oder R^{1c} handelt.

Beispiele bevorzugter Hilfsmittel der Formel (III) umfassen
H₅C₂-O-C(S)-S-CH(CH₃)(COOH),
H₅C₂-O-C(S)-S-CH(CH₃)(COOCH₃),
H₅C₂-O-C(S)-S-CH(CH₃)(COOC₂H₅),
H₃C-O-CH₂-CH₂-O-C(S)-S-CH(CH₃)(COOH),
H₃C-O-CH₂-CH₂-O-C(S)-S-CH(CH₃)(COOCH₃),
H₃C-O-CH₂-CH₂-O-C(S)-S-CH(CH₃)(COOC₂H₅),
H₅C₂-O-C(S)-S-C(CH₃)(COOC₂H₅)₂,
H₅C₂-O-C(S)-S-C(CH₃)(COOCH₃)₂,
H₅C₂-O-C(S)-S-C(CH₃)(COOH)₂,
H₃C-O-CH₂-CH₂-O-C(S)-S-C(CH₃)(COOC₂H₅)₂,
H₃C-O-CH₂-CH₂-O-C(S)-S-C(CH₃)(COOCH₃)₂, und
H₃C-O-CH₂-CH₂-O-C(S)-S-C(CH₃)(COOH)₂.

Ganz besonders bevorzugte Hilfsmittel sind H₅C₂-O-C(S)-S-CH(CH₃)(COOH) und
H₅C₂-O-C(S)-S-CH(CH₃)(COOCH₃).

In einer weiteren besonders bevorzugten Ausführungsform handelt es sich bei dem Hilfsmittel (H) um ein Trithiocarbonat, welches die allgemeine Formel R¹-S-C(S)-S-CH(CH₃)(COOR³) (IV) aufweist, und wobei es sich bei R¹ in Formel (IV) bevorzugt um einen Rest R^{1a} oder R^{1b} handelt.

Beispiele bevorzugter Hilfsmittel der Formel (IV) umfassen
H₅C₂-S-C(S)-S-CH(CH₃)(COOC₂H₅),
H₅C₂-S-C(S)-S-CH(CH₃)(COOCH₃),
H₅C₂-S-C(S)-S-CH(CH₃)(COOH),
H₃C-(CH2)₃-S-C(S)-S-CH(CH₃)(COOC₂H₅),
H₃C-(CH₂)₃-S-C(S)-S-CH(CH₃)(COOCH₃),
H₃C-(CH₂)₃-S-C(S)-S-CH(CH₃)(COOH),
HOOC-CH₂-CH₂-S-C(S)-S-CH(CH₃)(COOH),
H₃COOC-CH₂-CH₂-S-C(S)-S-CH (CH₃)(COOCH₃) oder
H₃COOC-CH₂-CH₂-S-C(S)-S-CH(CH₃)(COOC₂H₅).

Ganz besonders bevorzugt sind H₃C-(CH₂)₃-S-C(S)-S-CH(CH₃)(COOCH₃) und H₃C-(CH₂)₃-S-C(S)-S-CH(CH₃)(COOH).

Die Herstellung der beschriebenen Hilfsmittel kann nach dem Fachmann prinzipiell bekannten Methoden erfolgen. Beispielsweise können ein Alkohol oder Thiol R¹-XH, CS₂ und ein Bromid Br- CR²ₙ(COOR³)ₘ miteinander umgesetzt werden. Bevorzugt können in einer ersten Stufe CS₂ mit R¹-XH umgesetzt und die entstehende Säure mit KOH neutralisiert werden. Das erhaltene Salz R¹-X-C(=S)-SK, beispielsweise Kaliumethylxanthogenat H₅C₂-O-C(=S)-SK kann dann in einer zweiten Stufe mit dem genannten Bromid, beispielsweise Br-CH(CH₃)-COOH umgesetzt werden. Kaliumethylxanthogenat ist kommerziell erhältlich.

Es ist selbstverständlich möglich, auch Mischungen zweier oder mehrerer Hilfsmittel [H] einzusetzen.

Die beschriebenen Hilfsmittel (H) sind vergleichsweise hydrophil lösen sich zumindest teilweise in Wasser bzw. Wasser-Acrylsäure-Mischungen. Zur Durchführung des erfindungsgemäßen Verfahrens wird das schwefelhaltige Hilfsmittel (H) zunächst als wässrige Lösung oder Dispersion vorgelegt. Die Begriffe "wässrig" bzw. "wässriges Medium" wurden eingangs definiert. Optional können auch noch Additive zur Verbesserung der Löslichkeit des Hilfsmittels (H) zugegeben werden, bevorzugt wird aber ohne derartige Additive gearbeitet.

Für den Fachmann ist klar, dass Carbonsäureestergruppen in saurem wässrigem Medium hydrolysiert werden können. Dies hat zur Folge, dass auch beim Einsatz der Hilfsmittel (H) in Form ihrer Ester nach einiger Zeit zumindest ein Teil des Hilfsmittels als freie Carbonsäure oder-je nach pH-Wert des Mediums- als Salz davon vorliegt. Weiterhin werden als Folge der Hydrolyse Alkohole aus der Esterguppe freigesetzt, so dass in diesem Falle das wässrige Medium geringe Mengen Alkohol enthält, selbst wenn ursprünglich gar kein Alkohol als Lösemittel eingesetzt wurde.

Die Polymerisation wird in einem temperierbaren Reaktionsbehälter durchgeführt. Zur Durchführung der Polymerisation geeignete Apparaturen sind dem Fachmann prinzipiell bekannt. Es kann sich beispielsweise um Rührkessel handeln, welche über eine entsprechende Anzahl von Zugabevorrichtungen zur Dosierung der einzelnen Komponenten verfügen, insbesondere zum kontinuierlichen Zugeben der Monomere sowie ggf. des Initiators sowie Möglichkeiten zur Inertisierung und zur kontrollierten Temperaturführung.

Zur Durchführung des erfindungsgemäßen Verfahrens wird in einem ersten Verfahrensschritt eine wässrige Lösung oder Dispersion des schwefelhaltigen Hilfsmittels (H) im temperierbaren Reaktionsbehälter vorgelegt.

Beim erfindungsgemäßen Verfahren wird die Gesamtmenge des eingesetzten wässrigen Mediums so bemessen, dass nach Durchführung des Verfahrens die Konzentration des Homo- oder Copolymers im wässrigen Medium bevorzugt 20 bis 60 Gew. % bzgl. aller Bestandteile der wässrigen Lösung aufweist, bevorzugt 30 bis 55 Gew. % und besonders bevorzugt 35 bis 52 Gew. %. Man erhält auf diese Art und Weise unmittelbar gebrauchsfertige Lösungen.

Dieser Maßgabe entsprechend wird bei der Vorlage des schwefelhaltigen Hilfsmittels (H) in wässrigem Medium maximal die Gesamtmenge des erforderlichen wässrigen Mediums eingesetzt. Im Regelfalle wird die Menge des Wassers vom Fachmann aber geringer bemessen, weil es im Regelfalle sinnvoll ist, zumindest den Initiator vor dem Zugeben in wässrigem Medium zu lösen und in gelöster Form zuzusetzen. Im Regelfalle sollte zumindest 50 %, bevorzugt mindestens 60 % und besonders bevorzugt mindestens 75 % der Gesamtmenge an wässrigem Medium vorgelegt werden. Bewährt hat es sich, das Hilfsmittel in einer Konzentration von nicht mehr 75 mmol / I, bevorzugt nicht mehr als 60 mmol / I einzusetzen, ohne dass die Erfindung damit auf diese Werte beschränkt sein soll. Im nächsten Verfahrensschritt wird die vorgelegte Lösung bzw. Dispersion -falls erforderlichauf die gewünschte Polymerisationstemperatur von 20 bis 100°C erwärmt. Dieser Temperaturbereich stellt sicher, dass die Polymerisation drucklos gefahren werden. Es ist selbstverständlich möglich, die Polymerisationstemperatur im Zuge des Verfahrens zu ändern, also beispielsweise stufenweise zu erhöhen. Bevorzugt beträgt die Polymerisationstemperatur 50 bis 95°C und besonders bevorzugt 60 bis 90°C.

Zur Polymerisation werden der Initiator, die Acrylsäure sowie ggf. weitere Comonomere (C) zu der der vorgelegten Lösung bzw. Dispersion des Hilfsmittels in wässrigem Medium gegeben. Die Zugabe der Komponenten erfolgt erfindungsgemäß kontinuierlich, d.h. es wird nicht die Gesamtmenge der Komponenten auf einmal zugegeben, sondern die Zugabe erfolgt nach und nach im Verlaufe der Reaktionszeit. Nach vollständiger Zugabe kann sich ggf. noch eine gewisse Nachreaktionszeit anschließen.

Die Acrylsäure ist flüssig und wird bevorzugt in reiner Form zudosiert. Sie kann aber selbstverständlich auch in Form einer wässrigen Lösung eingesetzt werden. Der Begriff "Acrylsäure" soll hierbei sowohl freie Acrylsäure als auch Salze der Acrylsäure, beispielsweise Alkalimetall-, Erdalkalimetall oder Ammoniumsalze umfassen. Salze können bevorzugt als wässrige Lösung eingesetzt werden.

Falls Comonomere (C) eingesetzt werden, können diese mit der Acrylsäure gemischt werden oder bevorzugt mittels eines separaten Zulaufs zugegeben werden. Je nach Eigenschaften weiterer Monomere können diese in Reinform oder als wässrige Lösung eingesetzt werden.

Bei dem Initiator (In) handelt es sich um einen Azogruppen aufweisenden, wasserlöslichen Initiator für die thermische Polymerisation. Er wird bevorzugt als Lösung in wässrigem Medium eingesetzt und parallel oder zumindest im Wesentlichen parallel zu der Zugabe der Acrylsäure bzw. weiterer Comonomere kontinuierlich zugegeben. "Im Wesentlichen parallel" soll hierbei heißen, dass die Monomere oder der Initiator eine gewisse Vorlauf- oder Nachlaufzeit gegenüber der jeweils anderen Komponenten haben können, dass mindestens 50 mol %, bevorzugt 80 mol % und besonders bevorzugt mindestens 90 mol % des Initiators und der Monomere gleichzeitig in den Reaktionsbehälter dosiert werden. Durch das parallele, kontinuierliche Zugeben der Komponenten wird auch die Reaktionswärme kontinuierlich erzeugt und die Temperatur im Reaktionsbehälter kann leicht konstant gehalten werden.

Wasserlösliche Azogruppen aufweisende Initiatoren sind dem Fachmann prinzipiell bekannt, und der Fachmann trifft eine geeignete Auswahl. Er achtet dabei besonders darauf, dass der eingesetzte Initiator eine an die gewünschte Polymerisationstemperatur angepasste thermische Stabilität aufweist. Die thermische Stabilität von Initiatoren wird üblicherweise durch die Temperatur der 10 h -Halbwertszeit 10 h t _{½} angegeben, das heißt diejenige Temperatur, bei der 50 % der ursprünglichen Initiatormenge innerhalb von 10 h in Radikale zerfallen. Zur Durchführung des erfindungsgemäßen Verfahrens können bevorzugt Initiatoren mit einer 10 h t _{½} von 40 bis 90°C, bevorzugt 50 bis 70°C eingesetzt werden.

Beispiele geeigneter Initiatoren umfassen 2,2'-Azobis[2-(2-imidazolin-2-yl)propan]dihydrochlorid (10 h t _{½} : 44°C), 2,2'-Azobis[2-(2-imidazolin-2-yl)propan]disulfate dihydrat (10 h t _{½}: 47°C), 2,2'-Azobis(2-methylpropionamidin)dihydrochlorid (10 h t _{½}: 56°C), 2,2'-Azobis[N-(2-carboxyethyl)-2-methylpropionamidin]hydrat (10 h t _{½} : 57°C), 2,2'-Azobis{2-[1-(2-hydroxyethyl)-2-imidazolin-2-yl]propan}dihydrochlorid (10 h t _{½}: 60°C), 4,4'-Azobis(4-cyanopentansäure) (10 h t _{½}: 60°C), 2,2'-Azobis(1-imino-1-pyrrolidino-2-ethylpropan)dihydrochlorid (10 h t _{½} : 67°C), 4-(t-Butylazo)-4-cyanopentansäure (10 h t _{½} : 73°C), 2,2'-Azobis{2-methyl-N-[1,1-bis(hydroxymethyl)-2-hydroxyethl]propionamid} (10 h t _{½} : 80°C) oder 2,2'-Azobis[2-methyl-N-(2-hydroxyethyl)propionamid] (10 h t _{½} : 87°C).
Besonders bevorzugt zur Ausführung der Erfindung ist 2,2'-Azobis(2-methylpropionamidin)-dihydrochlorid.

Erfindungsgemäß beträgt das Molverhältnis der Menge des eingesetzten Initiators zur Menge des eingesetzten Hilfsmittels [In] / [H] 1:1 bis 1 : 100, bevorzugt 1: 2 bis 1 : 50 und besonders bevorzugt 1 : 3 bis 1 : 20.

Das Molverhältnis der Menge der eingesetzten Monomere zur Menge des eingesetzten Hilfsmittel [Monomere] / [H] beträgt 5 : 1 bis 150 : 1, bevorzugt 10 : 1 bis 100 : 1, besonders bevorzugt 20 : 1 bis 60 : 1 und ganz besonders bevorzugt 30 : 1 bis 50 : 1.

Die Polymerisation wird bis zu einem Umsatz von mindestens 99 % bzgl. der eingesetzten Monomere geführt.

Die Polymerisation kann bevorzugt in stark saurem Medium vorgenommen werden, indem man zur Synthese reine Acrylsäure einsetzt. Die Polymerisation kann auch in weniger stark saurem, leicht saurem, neutralem oder leicht alkalischem Medium vorgenommen werden. Ein zu hoher pH-Wert sollte hierbei aber vermieden werden, weil ansonsten die Gefahr besteht, dass die schwefelhaltigen Hilfsmittel hydrolysieren und dadurch unwirksam werden könnten. Bevorzugt sollte der pH-Wert im Zuge der Reaktion pH 7, besonders bevorzugt pH 5 und ganz besonders bevorzugt pH 2 nicht übersteigen. Die Einstellung des pH-Wertes kann durch die Zugabe einer Base wie beispielsweise von NaOH erfolgen. Die Base sollte im Regelfalle nicht mit dem schwefelhaltigen Hilfsmittel (H) vorgelegt werden, um die bereits genannte Hydrolyse zu vermeiden, sondern sollte kontinuierlich im Verlauf der Reaktion zugegeben werden, bevorzugt als wässrige Lösung. Alternativ kann man die zuzugebende Acrylsäure ganz oder teilweise in Form ihrer Salze einsetzen.

Die zahlenmittlere molare Masse Mₙ des nach dem erfindungsgemäßen Verfahren erhaltenen Homo- oder Copolymers der Acrylsäure beträgt 500 g/mol bis 10000 g/mol, bevorzugt 1000 g/mol bis 8000 g/mol, besonders bevorzugt 2000 g/mol bis 5000 g/mol und ganz besonders bevorzugt 3000 bis 4000 g/mol.
Die Uneinheitlichkeit der mittels des Verfahrens erhaltenen Homo- oder Copolymere der Acrylsäure M_{w} / Mₙ ist erfindungsgemäß kleiner als 2, bevorzugt ist M_{w} / Mₙ < 1,8 und besonders bevorzugt < 1,6.

Die eingesetzten Hilfsmittel (H) zur Kontrolle der radikalischen Polymerisation werden bei der RAFT-Polymerisation in stöchiometrischen Mengen in das Polymer eingebaut, so dass jede Polymerkette das Hilfsmittel (H) oder zumindest Fragmente davon enthält. Dementsprechend ist der Anteil des Hilfsmittels (H) im Polymer umso höher, je niedriger das mittlere Molekulargewicht des Polymers ist. Während bei hohen Molekulargewichten der Einfluss des Hilfsmittels auf die Eigenschaften des Polymers meist vernachlässigt werden kann, kann der Einfluss des Hilfsmittels bei niedrigen Molekulargewichten meist nicht mehr vernachlässigt werden.

Mittels des erfindungsgemäßen Verfahrens werden vergleichsweise niedermolekulare Homo- oder Copolymer der Acrylsäure synthetisiert. Das Verhältnis von Monomeren zum Hilfsmittel [Monomere] / [H] beträgt erfindungsgemäß nur 5 : 1 bis 150 : 1. Die Polymere enthalten also vergleichsweise hohe Mengen des schwefelhaltigen Hilfsmittels. Daher weisen die nach der Polymerisation erhaltenen, vergleichsweise niedermolekularen Polymere einen deutlich wahrnehmbaren, äußerst unerwünschten Geruch auf. Außerdem weisen die Polymere eine leichte, ebenfalls unerwünschte Farbe auf.

Im Anschluss an die Polymerisation werden die in das Homo- oder Copolymere der Acrylsäure eingebauten Hilfsmittel (H) daher in einem weiteren Verfahrensschritt mittels geeigneter Maßnahmen desaktiviert.

Der Begriff "Desaktivierung" im Sinne dieser Erfindung bedeutet, dass die in das Polymer eingebauten Hilfsmittel bzw. Fragmente der Hilfsmittel entweder ganz oder teilweise abgespalten werden oder -ohne abgespalten zu werden- mittels geeigneter chemischer Reaktionen so verändert werden, dass keine nachteiligen Produkteigenschaften von ihnen mehr ausgehen, insbesondere, dass kein unerwünschter Geruch und/oder keine ungewünschte Färbung mehr von den Acrylsäurepolymeren ausgeht.

Methoden zur Desaktivierung wurden bereits eingangs erwähnt, beispielsweise die von US 2003/166790, US 2004/122193 oder US 2007/0027266 offenbarten Methoden. Nicht alle Methoden sind aber zur Anwendung in wässriger Lösung geeignet.

In einer bevorzugten Ausführungsform der Erfindung nimmt man die Desaktivierung durch Hydrolyse unter Verwendung einer Base vor. Bei der Base kann es sich um eine Alkalimetallbase wie beispielsweise NaOH oder KOH handeln, oder es können auch Ammoniak oder Amine eingesetzt werden. Die Reaktion kann vorgenommen werden, indem man nach Abschluss der Polymerisationsreaktion der wässrigen Lösung die gewünschte Base zusetzt und die Lösung erwärmt. Bevorzugt beträgt die Temperatur im Zuge der Hydrolyse 50 bis 100°C und bevorzugt sollte Base in einer solchen Menge eingesetzt werden, dass der der pH-Wert mindestens 7 beträgt.

In einer bevorzugten Ausführungsform der Erfindung wird die Desaktivierung des Hilfsmittels unter Verwendung eines Oxidationsmittels vorgenommen. Als Oxidationsmittel kommen insbesondere, Jod, Natriumhypochlorit oder Peroxide in Betracht wie beispielsweise Wasserstoffperoxid oder organische Peroxide. Die Desaktivierung kann vorgenommen werden, indem man eine wässrige Peroxidlösung, insbesondere eine wässrige H₂O₂-Lösung nach Abschluss der Polymerisationsreaktion der wässrigen Lösung zugibt und die Lösung erwärmt. Hierbei wird der im Hilfsmittel vorhandene Schwefel zu Schwefel in höhere Oxidationsstufen oxidiert, beispielsweise zu Sulfat. Gebildetes Sulfat kann bevorzugt unter Verwendung geeigneter Hilfsmittel, wie beispielsweise Bariumhydroxid aus der Polymerlösung ausgefällt werden.

In einer weiteren bevorzugten Ausführungsform der Erfindung wird die Desaktivierung des Hilfsmittels unter Verwendung eines Reduktionsmittels vorgenommen. Als Reduktionsmittel kommt insbesondere Ascorbinsäure in Betracht.

In einer weiteren bevorzugten Ausführungsform der Erfindung wird die Desaktivierung des Hilfsmittels unter Verwendung eines Radikalstarters mit einem H-Donor vorgenommen. Als Radikalstarter kommen insbesondere organische Peroxide, wie beispielsweise Laurylperoxide in Betracht. Als H-Donor kommen sekundäre und tertiäre Alkohole, Toluol, und Hypophosphorsäure im Betracht.

Bei der Desaktivierung kommen die besonderen Vorteile der speziellen Hilfsmittel (H) zur Polymerisation von Acrylsäure zum Vorschein. Die Hilfsmittel lassen sich desaktivieren, ohne dass es hierbei zu einem Abbau der Polymere oder zu einer Vergrößerung der Uneinheitlichkeit des Polymers M_{W} / Mₙ kommt.

Die gemäß dem erfindungsgemäßen Verfahren erhaltenen Homo- oder Copolymere der Acrylsäure eignen sich ganz besonders zum Dispergieren von Pigmenten, insbesondere zum Dispergieren bzw. Mahlen von anorganischen Pigmente wie beispielsweise Calciumcarbonat, Kaolin, Titandioxid, Zinkoxid, Zirkonoxid, Aluminiumoxid, insbesondere zum Dispergieren von gemahlenem Calciumcarbonat (GCC). Ziel ist die Herstellung von wässrigen Suspensionen der genannten Pigmente (Pigmentslurries).
Die Polyacrylsäurelösung wird zu diesem Zweck bevorzugt teilweise neutralisiert eingesetzt, so dass der pH-Wert der eingesetzten Lösung etwa 5 beträgt.

Zum Dispergieren bzw. Mahlen von Pigmenten - besonders anorganischen Pigmenten - werden anionische Dispergiermittel auf Basis Polyacrylsäure und deren Salze eingesetzt. Die erfindungsgemäß hergestellten Polymere sind besonders geeignet für anspruchsvolle Calciumcarbonat-Slurries, welche einen Feststoffgehalt von mindestens 70 Gew. % und eine Teilchengröße von 95 % kleiner 2 µm und 75 % kleiner 1 µm haben. Durch den Einsatz der erfindungsgemäß hergestellten Polyacrylsäure erfolgt die Dispergierung bzw. Mahlung besonders energieeffizient und es lässt sich eine gleichmäßige Größenverteilung der Pigmente erreichen. Desweiteren kann die Mahldauer reduziert werden und die resultierende Suspension hat eine niedrige Viskosität. Außerdem bleibt der Pigmentslurry langzeitstabil, d.h. der Anstieg der Viskosität mit der Zeit ist relativ gering. Dem Fachmann sind geeignete Apparaturen zum Dispergieren bzw. Mahlen anorganischer Pigmente bekannt.

Die folgenden Beispiele sollen die Erfindung näher illustrieren:

### Analysenmethoden:

Von den erhaltenen Polyacrylsäurelösungen wurde jeweils der Umsatz, die mittlere molare Masse Mₙ sowie die Uneinheitlichkeit M_{W} / Mₙ bestimmt.

Die Bestimmung des Umsatzes erfolgte jeweils mit ¹H-NMR in D₂O.

Die mittlere molare Masse Mₙ sowie die Uneinheitlichkeit M_{W} / Mₙ wurden jeweils mittels Gelpermationschromatographie (GPC) bestimmt. Die GPC-Kalibrierung erfolgte mit Polyacrylsäure (Na-Salz) bekannter Verteilung als Standard. Elutionsmittel: Eine Mischung von 0,08 mol/I TRIS-Puffer pH = 7,0 in destilliertem Wasser, 0,15 mol/I NaCl und 0,01 mol/I NaN₃.

### Beispiele 1 bis 4:

Polymerisation von Acrylsäure mit unsymmetrischen hydrophilen RAFT-Reagenzien

### Allgemeine Versuchsvorschrift:

Die Polymerisation wurde in einem 1-Liter-Kolben mit Kühlfalle und Gaszuleitung vorgenommen. Der Kolben wies weiterhin einen Zulauf für Acrylsäure und einen Zulauf für den Initiator aus.
0,18 mol des jeweiligen RAFT-Reagenz' (siehe Tabelle 1) wurden in 450 ml Wasser gelöst bzw. suspendiert. Die Mischung wurde unter kontinuierlicher Stickstoff-Einleitung und Rühren auf 70°C geheizt. Zu der Mischung wurden 450 g (6,25 mol) Acrylsäure kontinuierlich innerhalb von 4 Stunden und parallel dazu 4,9 g (18 mmol) 2,2'-Azobis(2-methylpropionamidin)-dihydrochlorid (10 h t _{½} : 56°C) gelöst in 40 ml Wasser in 4,5 Stunden zugetropft. Die Mischung wurde nach beendeter Zugabe auf Raumtemperatur gekühlt und wie oben beschrieben analysiert. Die jeweils verwendeten RAFT-Reagenzien sowie die Analysenergebnisse sind in Tabelle 1 zusammengestellt

### Beispiel 5:

Polymerisation von Acrylsäure mit unsymmetrischen hydrophilen RAFT-Reagenzien bei in-situ-Herstellung des RAFT-Reagenz'

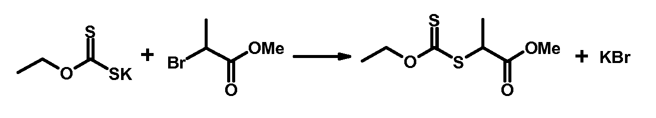

Die Reaktion wurde in der Apparatur gemäß Beispiel 1 durchgeführt.

30 mmol Kaliumethylxanthogenat und 30 mmol Brompropionsäuremethylester wurden in 200 ml Wasser in einem 1-Liter-Kolben gerührt. Die Mischung wurde unter kontinuierlicher Stickstoff-Einleitung und Rühren auf 70°C geheizt. Nach 3 Stunden wurden 1 mol Acrylsäure zugetropft. Weiterhin wurden 0,81 g (3 mmol) 2,2'-Azobis(2-methylpropionamidin)-dihydrochlorid gelöst in 10 ml Wasser innerhalb von 2 Stunden zugetropft. Die Mischung wurde nach beendeter Zugabe auf Raumtemperatur gekühlt und wie oben beschrieben analysiert.

### Vergleichsbeispiel 1:

Es wurde wie bei Beispielen 1 bis 4 beschrieben vorgegangen, nur wurde ein deutlich hydrophoberes RAFT-Ragenz eingesetzt.

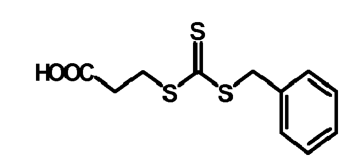

Die Analysenergebnisse sind in Tabelle 1 zusammengestellt.

### Beispiel 6:

Erfindungsgemäße Polymerisation mit Desaktivierung des RAFT-Reagenz mittels alkalischer Hydrolyse

Der Versuch wurde in der Apparatur gemäß Beispiel 1 durchgeführt. Es wurde das folgende RAFT-Reagenz eingesetzt:

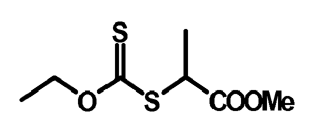

0,15 mol des RAFT-Reagenz' wurden in 380 ml Wasser in einem gelöst bzw. suspendiert. Die Mischung wurde unter kontinuierlicher Stickstoff-Einleitung und Rühren auf 70°C geheizt. Zu der Mischung wurden 360 g (5 mol) Acrylsäure kontinuierlich innerhalb von 2 Stunden und parallel dazu 4,1 g (15 mmol) 2,2'-Azobis(2-methylpropionamidin)-dihydrochlorid gelöst in 100 ml Wasser in 2,25 Stunden zugetropft. Nach beendeter Zugabe wurden 5 ml Probe genommen und wie oben beschrieben analysiert. Der pH-Wert der Lösung ist 1,8. Der Geruch der Lösung ist unangenehm schwefelig.

Der pH-Wert der verbliebenen Lösung wurde anschließend mit 430 g 50 %-iger NaOH-Lösung alkalisch eingestellt und 1 Stunde bei 70°C gerührt. Der pH-Werte der Lösung ist 14. Die Mischung wurde auf Raumtemperatur abgekühlt und wie oben beschrieben analysiert. Die Lösung ist geruchlos. Die Ergebnisse sind in Tabelle 2 zusammengestellt.

### Beispiel 7:

Erfindungsgemäße Polymerisation mit oxidativer Desaktivierung des RAFT-Reagenz

Die Polymerisation wurde wie in Beispiel 6 durchgeführt. Die Desaktivierung des RAFT-Reagenz wurde wie folgt vorgenommen:

Zur der erhaltenen Polyacrylsäurelösung wurden 102 g 50 %-ige H₂O₂-Lösung in 5 Stunden bei 90°C zugetropft und noch 2 Stunden gerührt. Die Mischung wurde auf Raumtemperatur abgekühlt und wie oben beschrieben analysiert. Die Ergebnisse sind in Tabelle 2 zusammengestellt. Die pH-Werte der Lösung ist 0,5. Der schwefelige Geruch ist nicht mehr erkennbar.

### Vergleichsbeispiel 2:

Polymerisation von Acrylsäure mit symmetrischen hydrophilen RAFT-Reagenzien mit Desaktivierung des RAFT-Reagenz mittels alkalischer Hydrolyse

Der Versuch wurde in der Apparatur gemäß Beispiel 1 durchgeführt. Es wurde das folgende RAFT-Reagenz eingesetzt:

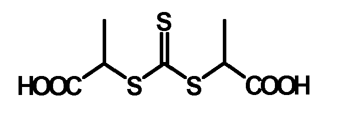

3 mmol des RAFT-Reagenz' wurden in 120 ml Wasser in einem gelöst bzw. suspendiert. Die Mischung wurde unter kontinuierlicher Stickstoff-Einleitung und Rühren auf 70°C geheizt. Zu der Mischung wurden 21,6 g (0,3 mol) Acrylsäure getropft und parallel dazu 0,81 g (0,3 mmol) 2,2'-Azobis(2-methylpropionamidin)-dihydrochlorid gelöst in 5 ml Wasser in 2 Stunden zugetropft. Es wurde 1 h nachgerührt. Nach beendeter Zugabe wurden 5 ml Probe genommen und wie oben beschrieben analysiert.

Die verbliebene Lösung wurde anschließend mit 30 g 50%-iger NaOH-Lösung neutralisiert und 1 Stunde bei 70°C gerührt. Die Mischung wurde auf Raumtemperatur abgekühlt und wie oben beschrieben analysiert. Die Ergebnisse sind in Tabelle 2 zusammengestellt.

### Vergleichsbeispiel 3:

Polymerisation von Acrylsäure mit symmetrischen hydrophilen RAFT-Reagenzien mit oxidativer Desaktivierung des RAFT-Reagenz

Es wurde das gleiche RAFT-Reagenz wie in Vergleichsbeispiel 2 eingesetzt.
Die Polymerisation wurde in einem 4-Liter-Kolben mit Kühlfalle und Gaszuleitung vorgenommen. Der Kolben wies weiterhin einen Zulauf für Acrylsäure und einen Zulauf für den Initiator aus.

75 mmol des RAFT-Reagenz' wurden in 1000 ml Wasser suspendiert. Die Mischung wurde unter kontinuierlicher Stickstoff-Einleitung und Rühren auf 70°C geheizt. Zu der Mischung wurden 216 g (3 mol) Acrylsäure kontinuierlich zugetropft und parallel dazu 20,3 g (7,5 mmol) 2,2'-Azobis(2-methylpropionamidin)-dihydrochlorid gelöst in 100 ml Wasser in 2 Stunden zugetropft. Es wurde 1 h nachgerührt. Nach beendeter Zugabe wurden 5 ml Probe genommen und wie oben beschrieben analysiert.

Die verbliebene Lösung wurde auf 50 % eingeengt, anschließend 22 ml 50%-ige H₂O₂-Lösung in 2 Stunden bei 60°C zugetropft und noch 30 Min gerührt. Die Mischung wurde auf Raumtemperatur abgekühlt und wie oben beschrieben analysiert. Die Ergebnisse sind in Tabelle 2 zusammengestellt.

Die Beispiele und Vergleichsbeispiele zeigen, dass bei der Verwendung symmetrischer Hilfsmittel (H) beim Abspalten des Hilfsmittels nach beendeter Reaktion gleichzeitig eine beträchtliche Verringerung des Molekulargewichtes der Polyacrylsäure um 30 bis 40 % erfolgt (siehe Vergleichsbeispiel 2 und Vergleichsbeispiel 3). Unsymmetrische, aber zu stark hydrophobe Hilfsmittel (H) führen zu einer breiten Molekulargewichtsverteilung (siehe Vergleichsbeispiel 1). Nur die erfindungsgemäß verwendeten, unsymmetrischen und hydrophilen Hilfsmittel (H) führen zu einer Molekulargewichtsverteilung M_{W} / Mₙ < 2 ohne dass es beim Abspalten des Hilfsmittels nach der Reaktion zu einem teilweisen Abbau der Polyacrylsäure kommt.

**Tabelle 1: Zusammenstellung der Beispiele und Vergleichsbeispiele**

| Nr. | Hilfsmittel (RAFT-Reagenz) | Molverhältnis Initiator / Hilfsmittel | Molverhältnis Acrylsäure / Hilfsmittel | Konzentration Polyacrylsäure [Gew. %] | Mₙ [g/mol] | M_{w} / Mₙ | Umsatz | Anmerkungen |
|---|---|---|---|---|---|---|---|---|
| Beispiel 1 | 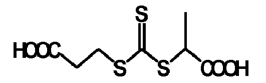 | 1 : 10 | 35 : 1 | 51 | 4200 | 1,3 | 99,5 | |
| Beispiel 2 | 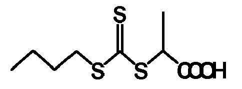 | 1 : 10 | 35 : 1 | 50 | 3600 | 1,3 | 99,5 | |
| Beispiel 3 | 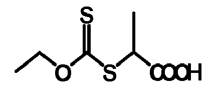 | 1 : 10 | 35 : 1 | 50 | 3900 | 1,6 | 99,9 | |
| Beispiel 4 | 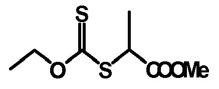 | 1 : 10 | 35 : 1 | 50 | 3700 | 1,5 | 99,9 | |
| Beispiel 5 | 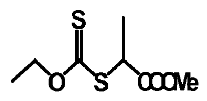 | 1:10 | 33 : 1 | 27 | 4200 | 1,6 | 99,9 | RAFT-Reagens wurde in-situ hergestellt |
| V1 | 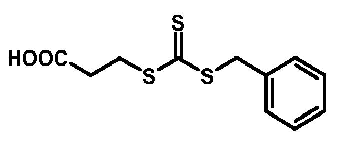 | 1:10 | 35 : 1 | 50 | 8500 | 2,3 | 99,5 | |

**Tabelle 2: Zusammenstellung der Beispiele und Vergleichsbeispiele**

| Nr. | Hilfsmittel (RAFT-Reagenz) | Molverhältnis Initiator / Hilfsmittel | Molverhältnis Acrylsäure / Hilfsmittel | Umsatz [%] | nach Polymerisation | | Nach der Desaktivierung | | |
|---|---|---|---|---|---|---|---|---|---|
| | | | | | Mₙ [g/mol] | M_{w} / Mₙ | Mₙ [g/mol] | M_{w} / Mₙ | Konzentration Polyacrylsäure [Gew. %] |
| Beispiel 6 | 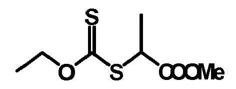 | 1:10 | 33 : 1 | 99,9 | 3500 | 1,5 | 3600 | 1,5 | 40 |
| Beispiel 7 | 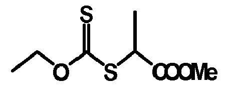 | 1:10 | 33 : 1 | 99,5 | 3400 | 1,5 | 3500 | 1,5 | 45 |
| V2 | 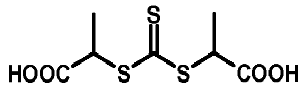 | 1 : 10 | 100 : 1 | 99,5 | 9700 | 1,2 | 6800 | 1,4 | 13 |
| V3 | 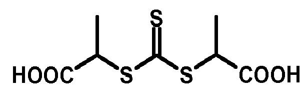 | 1 : 10 | 40 : 1 | 99,5 | 4200 | 1,1 | 2500 | 1,4 | 50 |

## Patentansprüche

1. Verfahren zur Herstellung von wässrigen Lösungen von Homo- oder Copolymeren der Acrylsäure mittels kontrollierter radikalischer Polymerisation von Acrylsäure sowie optional wasserlöslichen, monoethylenisch ungesättigten Comonomeren (C) in wässrigem Medium in Gegenwart eines schwefelhaltigen Hilfsmittels (H) zur Kontrolle der Reaktion, wobei
- die Menge Acrylsäure mindestens 80 Gew. % bzgl. der Summe aller Monomere zusammen beträgt,
- die zahlenmittlere molare Masse Mₙ des Homo- oder Copolymers 500 g/mol bis 10000 g/mol beträgt,
- die Uneinheitlichkeit des Homo- oder Copolymers M_{w} / Mₙ < 2 ist,
- die Konzentration des Homo- oder Copolymers 20 bis 60 Gew. % bzgl. aller Bestandteile der wässrigen Lösung beträgt, und
- die Polymerisationstemperatur 20 bis 100°C beträgt,
**dadurch gekennzeichnet, dass** es sich bei dem Hilfsmittel H um ein unsymmetrisches Molekül der allgemeinen Formel (I) R¹-X-C(S)-S-CR²ₙ(COOR³)ₘ (I) handelt, und wobei die Reste und die Indices die folgende Bedeutung haben:
n, m : unabhängig voneinander 1 oder 2, wobei n + m = 3,
X : O oder S,
R¹: ein Rest ausgewählt aus der Gruppe von
R^{1a} Alkylresten ausgewählt aus der Gruppe von Methyl-, Ethyl-, 1-Propyl-, 1-Butyl und 2-Methyl-1-propyl,
R^{1b} Resten der allgemeinen Formel R³OOC-(CH₂)ₒ-, wobei O für eine natürliche Zahl von 1 bis 4 steht, oder
R^{1c} Alkoxyresten der allgemeinen Formel R⁴-[-O-CH₂-CH₂]ₖ-, wobei R⁴ für H oder einen geradkettigen oder verzweigten Alkylrest mit 1 bis 4 C-Atomen und k für eine Zahl von 1 bis 10 steht,
R²: unabhängig voneinander H oder ein Alkylrest mit 1 bis 4 C-Atomen, mit der Maßgabe, dass nicht mehr als ein Rest R² für H steht,
R³: unabhängig voneinander H, ein Kation, Methyl oder Ethyl,
und das Verfahren die folgenden Schritte umfasst:
- Vorlegen einer wässrigen Lösung oder Dispersion des schwefelhaltigen Hilfsmittels (H) in einem temperierbaren Reaktionsbehälter,
- Erwärmen auf die gewünschte Reaktionstemperatur,
- Kontinuierliches Zugeben eines Azogruppen aufweisenden, wasserlöslichen Initiators für die thermische Polymerisation (In), wobei das Molverhältnis der Gesamtmenge des Initiators (In) zum Hilfsmittels [In] / [H] 1:1 bis 1 : 100 beträgt,
- Kontinuierliches Zugeben von Acrylsäure oder Salzen davon sowie optional weiterer Comonomere (C) oder einer wässrigen Lösung der genannten Monomere, wobei das Molverhältnis der Monomere zum Hilfsmittel [Monomere] / [H] 5 : 1 bis 150 : 1 beträgt, sowie
- Desaktivieren des an das gebildete Acrylsäure-Homo- oder Copolymer gebundenen Hilfsmittels (H),
mit der Maßgabe, dass man die Polymerisation bis zu einem Umsatz von mindestens 99 % führt, und dass man die Gesamtmenge des eingesetzten wässrigen Mediums so bemisst, dass nach Durchführung des Verfahrens die Konzentration des Homo- oder Copolymers 20 bis 60 Gew. % bzgl. aller Bestandteile der wässrigen Lösung beträgt.

2. Verfahren gemäß Anspruch 1, **dadurch gekennzeichnet, dass** das Hilfsmittel (H) die allgemeine Formel (II) R¹-O-C(S)-S-CR²ₙ(COOR³)ₘ aufweist.

3. Verfahren gemäß Anspruch 2, **dadurch gekennzeichnet, dass** das Hilfsmittel (H) die allgemeine Formel (III) R¹-O-C(S)-S-CH(CH₃)(COOR³) aufweist, und es sich bei R¹ um einen Rest R^{1a} oder R^{1c} handelt.

4. Verfahren gemäß Anspruch 1, **dadurch gekennzeichnet, dass** das Hilfsmittel (H) die allgemeine Formel (IV) R¹-S-C(S)-S-CH(CH₃)(COOR³) aufweist, und es sich bei R¹ um einen Rest R^{1a} oder R^{1b} handelt.

5. Verfahren gemäß einem der Ansprüche 1 bis 4, dass als Monomer ausschließlich Acrylsäure eingesetzt wird.

6. Verfahren gemäß einem der Ansprüche 1 bis 5, **dadurch gekennzeichnet, dass** die Polymerisationstemperatur 50 bis 95°C beträgt.

7. Verfahren gemäß einem der Ansprüche 1 bis 5, **dadurch gekennzeichnet, dass** die Temperatur der 10 h - Halbwertszeit 10 h t _{½} des eingesetzten Initiators 40 bis 90°C beträgt.

8. Verfahren gemäß einem der Ansprüche 1 bis 5, **dadurch gekennzeichnet, dass** das Molverhältnis der Monomere zum Hilfsmittel [Monomere] / [H] 10 : 1 bis 100 : 1 beträgt.

9. Verfahren gemäß einem der Ansprüche 1 bis 5, **dadurch gekennzeichnet, dass** das Molverhältnis des Initiators zum Hilfsmittel [In] / [H] 1 : 3 bis 1 : 20 beträgt.

10. Verfahren gemäß einem der Ansprüche 1 bis 9, **dadurch gekennzeichnet, dass** die zahlenmittlere molare Masse Mₙ des Homo- oder Copolymers 2000 g/mol bis 5000 g/mol beträgt

11. Verfahren gemäß einem der Ansprüche 1 bis 10, dass man die Desaktivierung des Hilfsmittels unter Verwendung eines Oxidationsmittels vornimmt.

12. Verfahren gemäß Anspruch 11, **dadurch gekennzeichnet, dass** man bei der Oxidation gebildetes Sulfat unter Verwendung eines geeigneten Hilfsmittels aus der wässrigen Lösung entfernt.

13. Verfahren gemäß einem der Ansprüche 1 bis 10, dass man die Desaktivierung des Hilfsmittels durch Hydrolyse unter Verwendung einer Base vornimmt.
